# EUROPEAN PATENT APPLICATION

(11) **EP 4 502 436 A1**
(43) Date of publication of application: **05.02.2025**
(21) Application number: 24190783.1
(22) Date of filing: 25.07.2024
(51) Int. Cl.: F16K 15/06, F16K 15/18, F16K 17/04, F16K 27/02, F25B 41/38, F16K 31/00

(54) **ANTIFREEZE VALVE SYSTEM**

(30) Priority: 02.08.2023 IT 202300016458
(71) Applicant: CIMBERIO HOLDING S.r.l., 20145 Milano (IT)
(72) Inventor: CIMBERIO, Roberto, 28010 Ameno Fraz. Vacciago (NO) (IT); GUIDETTI, Tiziano, 28021 Borgomanero (NO) (IT); CHIARELLO, Andrea, 28040 Oleggio Castello (NO) (IT)
(74) Representative: PGA S.p.A.

(57) **Abstract**

The present invention relates to a valve system comprising a manifold (2) presenting an inlet (4), an outlet (5) and a channel (3), as well as a fluid intercepting organ (6) positioned in the channel and presenting a shutter (7) movable between an open position wherein it allows the transit of a fluid from the inlet to the outlet and a closed position wherein it prevents the transit of fluid from the outlet to the inlet of the manifold. The manifold also has a first access (8) defined on a first section (2a) of the manifold (2) interposed between the inlet and the intercepting organ, a second access (9) defined on a second section (2b) of the manifold interposed between the intercepting organ and the outlet, a connecting section (10) that put the first and second accesses in fluid communication. The first and second accesses are defined on the same side of the manifold to allow the passage of fluid between the first and second sections of the manifold.

## Description

### FIELD OF THE INVENTION

The present invention concerns an antifreeze valve system capable of preventing freezing of circulating water in an air-conditioning system.

The invention may find advantageous application in systems exposed to frost, such as heat pump heating systems, cooling systems or in irrigation systems.

### STATE OF THE ART

Valve systems, for example installable in heating systems, are known to prevent formation of ice such as to cause rupture or water leakage.

An example of a valve system capable of performing these functions, described in U.S. Patent Application No. US3992898A, has a fluid shut-off member that, in an open condition, allows fluid passage at a maximum flow rate, while, in a closed condition, it allows fluid passage, in the reverse direction, of a reduced fluid flow rate. For this purpose, the fluid shut-off member has a shutter having a hole that connects two areas of the valve system to allow, even in the closed condition, fluid passage and prevent ice formation in the system. The Applicant noted how the described solution shows limitations and drawbacks, thus being improvable in some respects.

### PURPOSE OF THE INVENTION

It is therefore the purpose of the present invention to solve at least one of the drawbacks and/or limitations of the previous solutions.

A first objective of the present invention is to make available an antifreeze valve system presenting a shutter having a solid body, that is, without holes or cavities.

It is also an aim of the present invention to make available an antifreeze valve system presenting a reduced number of sealing parts.

It is then the purpose of the present invention to make available antifreeze valve system presenting a simple and compact structure, which is easily installed on pre-existing domestic and/or industrial plumbing systems.

It is a further purpose of the present invention to provide an antifreeze valve system that exhibits a high degree of reliability and requires little maintenance.

These purposes and others, which will appear from the following description, are substantially achieved by an antifreeze valve system and use of said valve system in accordance with one or more of the following claims and/or aspects.

### SUMMARY

One or more of the above purposes are achieved by an antifreeze valve system and a use of said system as claimed.

Aspects of the invention are described below.

In a 1st aspect, it is provided an antifreeze valve system for plumbing systems, the antifreeze system including:
- a manifold (2) presenting at least one inlet (4), at least one outlet (5), and at least one channel (3) that places the inlet (4) in fluid communication with the outlet (5),
- a fluid shut-off member (6) positioned in the channel (3) of the manifold (2) between the inlet (4) and the outlet (5), wherein said fluid shut-off member (6) has a movable shutter (7) relatively to the manifold itself between:
   ∘ an open position where it allows a flow of fluid to pass through the channel (3) and direct from the inlet (4) to the outlet (5) of the manifold (2),
   ∘ a closed position wherein it prevents fluid flow passing through the channel (3) and directed from the outlet (5) to the inlet (4) of the manifold (2),
wherein the manifold (2) presents:
- a first access (8) defined on a first section (2a) of the manifold (2) interposed between the inlet (4) and the fluid shut-off member (6),
- a second access (9) defined on a second section (2b) of the manifold (2) interposed between the fluid shut-off member (6) and the outlet (5),
- a connecting section (10) configured to place the first access (8) in fluid communication with the second access (9),
wherein the first and second accesses (8, 9) are configured to allow, through the connecting section (10), fluid passage between the first and second sections (2a, 2b) of manifold (2).

For example as shown in the attached drawings the first and second accesses (8, 9) may be defined on the same side of manifold (2) to allow, through the connecting section (10), fluid passage between the first and second sections (2a, 2b) of manifold (2).

In a 2nd aspect according to the preceding aspect, the connecting section (10) is made within a thickness of a side wall (11) of the manifold (2).

In a 3rd aspect according to any of the above, the shutter (7) of the fluid shut-off member (6) is not active, either in opening or closing, on the first and second accesses (8, 9) of the manifold (2).

In a 4th aspect according to any of the preceding aspects said first and second accesses (8, 9) constantly realize, in cooperation with the connecting section (10), an auxiliary fluid communication between the inlet (4) and outlet (5) of the manifold (2).

In a 5th aspect according to any of the preceding aspects the first and second accesses (8, 9) are respective openings on the side wall (11) of the manifold (2), in interposition between inlet (4) and outlet (5) of the same manifold.

In a 6th aspect according to any of the preceding aspects, the shutter of the fluid shut-off member (6) is devoid of holes or channels that allow fluid passage through the shutter (7) when the shutter is in the closed position. In a 7th aspect according to any of the above aspects, the first access (8) and/or the second access (9) have a smaller cross-sectional area than a manifold (2) cross-sectional area measured at the inlet (4) or outlet (5) of manifold (2).

In an 8th aspect according to the preceding aspect, the ratio of the first and/or second access passage section (8, 9) to the manifold passage section (2) is less than 0.4, optionally between 0.05 and 0.25.

In a 9th aspect according to any of the preceding aspects, the fluid shut-off member (6) has a coupling portion (12) that may be coupled to an inner surface of the manifold (2).

In a 10th aspect according to the preceding aspect, the fluid shut-off member (6) has an abutting wall (15) constrained to and axially spaced from the coupling portion (12).

In an 11th aspect according to the preceding aspect, the fluid shut-off member (6) has a counter spring (14) carried by the abutting wall (15) and interposed between the latter and the shutter (7) of the same fluid shut-off member, said counter spring (14) being configured to apply a force on the shutter (7) such that it results in its movement from the open to the closed position.

In a 12th aspect according to any of the preceding aspects the manifold (2) includes a bushing (13) emerging from an outer surface of the manifold (2) transversely, optionally orthogonally, to the channel (3), where said bushing (13) surrounds the first and second accesses (8, 9) of the manifold (2).

In a 13th aspect according to the preceding aspect, the system includes a cap (48) removably engaged to the manifold (2) for closing bushing (13).

In a 14th aspect according to the preceding aspect at least part of said cap (48) delimits, in cooperation with the bushing (13) and the outer surface of the manifold (2), the connecting section (10).

In a 15th aspect according to any of the preceding three aspects, the bushing (13) has an engagement portion, optionally a threaded portion, opposite an outer surface of the manifold (2) and configured to removably engage the cap (48).

In a 16th aspect according to any of the preceding aspects, the manifold (2) includes a collar (37) emerging from an outer surface of the manifold (2) transversely to the channel (3), optionally from opposite side to the bushing (13), wherein said collar (37) defines a seat in communication with the channel (3) through a hole (36) made on the manifold itself.

In a 17th aspect according to the preceding aspect, the system includes a closure body (38) that may be removably engaged to the collar (37) to close the seat of the collar itself and prevent fluid leakage to an environment outside the channel (3).

In an 18th aspect according to any of the preceding aspects, the system includes an antifreeze valve (16) removably engaged to the manifold (2) and comprising:
- a valve body (17) having:
   ∘ an inlet (18) facing the first and second accesses (8, 9) of the manifold (2),
   ∘ a drain (19) opposite the inlet (18) for draining fluid into the outside environment (i.e., environment external to the antifreeze valve system),
   ∘ a chamber (20) that places the inlet (18) in fluid communication with the drain (19),
   ∘ a temperature-sensitive element (22) housed in the chamber (20) and sensitive to temperature changes,
   ∘ a shutter (21) engaged to the temperature-sensitive element (22) inside the chamber (20) which, depending on the temperature detected by the temperature-sensitive element (22), is movable between:
      ▪ a closed position wherein said shutter (21) obstructs the drain (19) of the valve body (17),
      ▪ an open position wherein said shutter (21) places the drain (19) in fluid communication with an environment outside the antifreeze valve system.

In a 19th aspect according to the preceding aspect, the antifreeze valve (16) is removably engaged to theta bushing (13) of the manifold (2).

In a 20th aspect according to the preceding aspect, the antifreeze valve (16) has a respective engagement portion (23), optionally a threaded portion, which may be engaged to a/the engagement portion of the bushing (13).

In a 21st aspect according to any of the three preceding aspects the shutter (21) of the antifreeze valve (16) includes:
- an upper body (21a), optionally cup-shaped, facing the first and second accesses (8, 9) of the manifold (2),
- a lower body (21b), optionally cup-shaped, distinct and spaced from the upper body (21a) and configured to obstruct the drain (19) when the shutter is in the closed position.

In a 22nd aspect according to the preceding aspect, the upper body (21a) and lower body (21b) of the shutter (21) of the antifreeze valve (16), are relatively mobile in approaching and receding from each other.

In a 23rd aspect according to any of the preceding two aspects, in the shutter closing position (21), the distance between the upper body (21a) and the lower body (21b) is greater than a distance between said bodies in the condition of opening the same shutter (21).

In a 24th aspect according to any of the preceding three aspects, the upper body (21a) and lower body (21b) of the shutter (21) of the antifreeze valve (16) have respective perimeter edges (21a', 21b') configured to guide the movement of the respective bodies (21a, 21b) relative to said valve body (17).

In a 25th aspect according to any of the preceding four aspects, the upper body (21a) of the shutter (21) includes a cavity facing the lower body (21b) of the same shutter, said cavity being in fluid communication with the chamber (20) of the valve body (17) of the antifreeze valve (16) and configured to house at least part of the thermosensitive element (22).

In a 26th aspect according to any of the preceding five aspects the lower body (21b) of the shutter (21) presents:
- a main body (24) on which a respective seat (25) facing the upper body (21a) of the shutter (21) is defined and configured to house at least part of the temperature-sensitive element (22),
- a hollow rod (26) extending from the main body (24) across the drain (19), from opposite side to the upper body (21a).

In a 27th aspect according to the preceding aspect, the main body (24) of the lower body (21b) of the antifreeze valve (16) has a side opening (27) that places the chamber (20) of the antifreeze valve (16) in fluid communication with a channel (28) inside the hollow rod (26).

In a 28th aspect according to any of the preceding two aspects, the lower body (21b) of the shutter (21) has an inner wall (40) that inferiorly bounds the seat (25) of said main body (24) and separates the same seat from the channel (28) of the hollow rod (26), preventing fluid communication.

In a 29th aspect according to any of the above two aspects, the valve body (17) of the antifreeze valve (16) has a collection zone (29) inferior to the drain (19) and in fluid communication with the channel (28) of the hollow rod (26).

In a 30th aspect according to the preceding aspect said collection zone (29) is perimetrically bounded by a side wall (29') and inferiorly bounded by an end wall (29").

In a 31st aspect according to any of the preceding five aspects, the lower body (21b) of the shutter (21) of the antifreeze valve (16) includes one or more first sealing elements (30), each carried by the hollow rod (26) externally to the channel (27) and in interposition between the chamber (20) of the valve body (17) and the drain (19).

In a 32nd aspect according to any of the preceding three aspects, the lower body (21b) of the shutter (21) of the antifreeze valve (16) includes a second sealing element (31) carried by the hollow rod (26) externally to the channel (27) and in interposition between the drain (19) and the collection zone (29) of the valve body (17) of the antifreeze valve (16).

In a 33rd aspect according to the preceding two aspects, the first and second sealing elements (30, 31) are axially spaced apart from each other.

In a 34th aspect according to any of the three preceding aspects each of said first sealing elements (30) is configured to prevent fluid passage from the chamber (20) of the antifreeze valve system (16) through a gap defined, under use conditions of the system (1), superior to the drain (19) between an outer wall of the hollow rod (26) and the valve body (17) of the antifreeze valve system (16).

In a 35th aspect according to any of the preceding three aspects, the second sealing element (31), in opening position of the shutter (21), defines a passage opening (32) in interposition between a side wall (29') of the collection zone (29) and the same second sealing element (31), configured to place the collection zone (29) in fluid communication with the drain (19).

In a 36th aspect according to any of the preceding four aspects, the second sealing element (31), in the shutter opening position (21), is placed, in use, superior to a connecting edge (41) between the side wall (29') of the collection zone (29) and the drain (19).

In a 37th aspect according to any of the above two aspects, the second sealing element (31), in the shutter closed position (21), occludes the passage opening (32) preventing fluid passage from the collection zone (29) to the drain (19).

In a 38th aspect according to any of the preceding aspects from 18th to 37th the heat-sensitive element (22) includes a deformable component (33), optionally made of heat conducting material of the variable volume type or a variable volume fluid.

In a 39th aspect according to the preceding aspect the thermosensitive element (22) may be configured between:
- a dilated condition wherein it determines a relative movement of the upper body (21a) and the lower body (21b) of the shutter (21) away from each other, bringing the same lower body of the shutter (21) into closing drain (19),
- a contracted condition wherein it determines a relative movement of the upper body (21a) and lower body (21b) of the shutter (21) approaching each other, causing the same lower body of the shutter (21) to open the drain (19).

In a 40th aspect according to any of the preceding aspects from 18th to 39th the valve body (17) of the antifreeze valve (16) includes:
- a first spring (34) interposed between an upper shoulder (34a) of said valve body (17) facing the first and second accesses (8, 9) of the manifold (2) and the upper body (21a) of the shutter (21), optionally the perimeter edge (21a') of the upper body (21a),
- a second spring (35) interposed between a lower shoulder (35a) of said valve body (17) and the lower body (21b) of the shutter (21), optionally the perimeter edge (21b') of the lower body (21b).

In a 41st aspect according to the preceding aspect, the first and second springs (34, 35) are configured to move the upper body and the lower body (21a, 21b) to approach each other.

In a 42nd aspect according to any of the preceding aspects, the system includes a vacuum breaker valve (41) acting on channel (3) of manifold (2) and sensitive to a differential pressure between atmospheric pressure and a fluid pressure in channel (3).

In a 43rd aspect according to the preceding aspect, the vacuum breaker valve (41) is located in theta seat of the/a collar (37).

In a 44th aspect according to any of the preceding two aspects, the vacuum breaker valve (41) includes a transducer (42) configured to allow, through a hole (43), the introduction of gas, e.g., air, into the manifold (2) when the fluid pressure in the channel (3) assumes values below atmospheric pressure.

In a 45th aspect according to any of the preceding aspects, the system includes a cap (48) according to the 13th or 14th aspect or an antifreeze valve (16) according to any of the preceding aspects from the 18th to the 44th, alternatively removably engageable to the manifold (2), optionally engageable to the bushing (13).

In a 46th aspect there is provided a use of the valve system according to any of the preceding aspects in an air conditioning plant.

In a 47th aspect according to the preceding aspect said plant includes:
- one or more primary heat sources (101) each configured to heat a fluid circulating in a primary supply line (102),
- one or more secondary heat sources (104) each configured to heat a fluid circulating in a respective secondary supply line (105),
wherein the primary supply line (102) and secondary supply line (105) are placed in fluid communication with one or more fluid supply lines (108), each of which is directed to serve a predetermined number of consumers (107).

In a 48th aspect according to the preceding aspect, primary heat sources (101) are configured to operate alternately with secondary heat sources (104) to serve consumers (107).

In a 49th aspect according to any of the preceding three aspects each primary heat source (101), in an active condition, is configured to heat the circulating fluid in the primary supply line (102) if the temperature of an environment outside of said closed environment is below a predetermined threshold, e.g., equal to 3°C, optionally equal to 0°C.

In a 50th aspect according to any of the above four aspects each secondary heat source (104), under a respective activation condition, is configured to heat the circulating fluid in the secondary supply line (105) if the temperature of an environment outside of said closed environment is above said predetermined threshold.

In a 51st aspect according to any of the preceding five aspects said valve system (1) is placed on the secondary supply line (105).

In a 52nd aspect according to any of the preceding six aspects in a/the activation condition of each primary heat source (101), said valve system allows fluid passage in the secondary flow line (105), ranging from 600 l/h to 18,000 l/h.

In a 53rd aspect according to any of the preceding seven aspects in one/the respective activation condition of each secondary heat source (104), said valve system allows fluid passage in the secondary supply line (105), ranging from 5 l/h to 300 l/h.

In a 54th aspect according to any of the preceding eight aspects the facility includes:
- one or more drain lines (109), each of which channels a fluid flow out of a respective outlet (107),
- a primary return line (103) connected to the primary heat source (101) and to each of these one or more drain lines (109),
- a secondary return line (106) connected to the secondary heat source (104) and to each of these one or more drain lines (109).

### BRIEF DESCRIPTION OF THE DRAWINGS

Some forms of implementation and some aspects of the invention will be described below with reference to the attached drawings, provided for illustrative purposes only and therefore not limiting, wherein:
- Figure 1 is a perspective view of the valve system in accordance with the present invention;
- Figure 2 is a longitudinal cross-sectional view of the valve system in accordance with the present invention;
- Figure 3 is a longitudinal sectional view of a valve system variant in accordance with the present invention presenting a fluid shut-off member with a shutter in the closed position;
- Figure 4 is a longitudinal cross-sectional view of the valve system in Figure 3 wherein the fluid shut-off member is in an open position;
- Figure 5 is a perspective view of a further variant of the valve system in accordance with the present invention;
- Figure 6 is a longitudinal sectional view of the figure 5 antifreeze valve system including an antifreeze valve in the open condition;
- Figure 7 is a longitudinal cross-sectional view of the figure 5 antifreeze valve system with the antifreeze valve in the closed condition;
- Figure 8 is a schematic view of an implant presenting the valve system in accordance with the present invention.

### DEFINITIONS AND CONVENTIONS

Note that in this detailed description corresponding parts illustrated in the various figures are shown with the same numerical references. The figures may illustrate the subject matter of the invention by means of representations that are not to scale; therefore, parts and components illustrated in the figures related to the subject matter of the invention may relate only to schematic representations.

### DETAILED DESCRIPTION

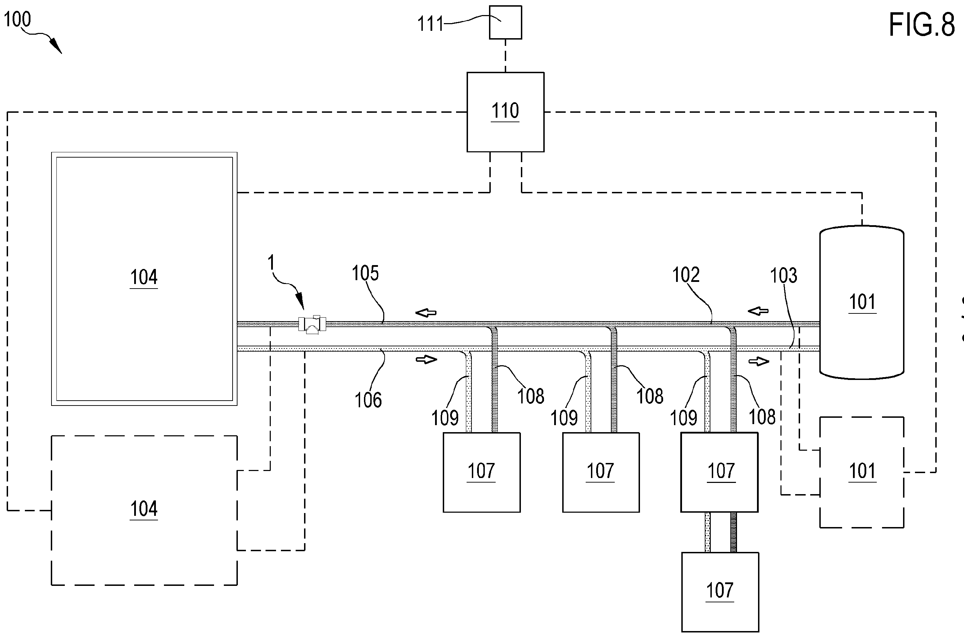

Antifreeze valve system for plumbing systems exposed to frost where, for example, antifreeze liquids are not to be used, has been collectively referred to as reference number 1. As shown in Figure 8, antifreeze system 1 may be installed in a system 100, such as heating and/or air conditioning, located at least partially outside a room to be heated or air conditioned.

The valve system 1 can find advantageous application in a system 100 comprising one or more primary heat sources 101 such as gas-fired or electrically powered heating, connected to a primary supply line 102 for distribution of heated fluid to one or more consumers (a consumer may for example be an entity or unit which needs to be heated, such as a room or a house or a building or a defined volume or ambient).

The system 100 further includes one or more secondary heat sources 104 such as heat pump, which may be installed outside the closed space (e.g., of a house or of a room) and connected to a respective secondary supply line 105. In one example, the primary supply line 102 and the secondary supply line 105 are in fluid communication with one or more fluid supply lines 108, each of which is directed to serve a predetermined number of consumers 107.

The system 100 may also include a primary return line 103 and a secondary return line 106 placed in fluid communication with one or more drain lines 109 intended to channel a flow of fluid out of the outlet each consumer 107. In one example, each primary heat source 101 is configured to heat the circulating fluid on the primary supply line 102 if the temperature of an environment outside the closed environment (e.g. outside the house or building or room) where the same primary heat source 101 is located is less than 3°C, optionally less than 0°C. On the other hand, each secondary heat source 104 is configured to heat the circulating fluid on the secondary supply line 105 if the temperature of an environment outside the closed environment, is above 3°C. In other words, each primary heat source 101 is configured to operate in heating the fluid circulating in the system under different atmospheric temperature conditions than each secondary heat source 104. Consequently, each primary heat source 101 is configured to operate alternately with the secondary heat sources 104. Alternative selection and activation of primary heat source 101 and secondary heat source 104 may be performed by a control unit 110 communicatively connected to the/each primary heat source(s) and the/each secondary heat source(s). Such a control unit 110 may be connected to a temperature sensor organ 111 (e.g., an outdoor ambient temperature sensor) and configured to receive a temperature signal from the temperature sensor organ, compare the measured temperature derived from that signal with a temperature threshold value, and selectively activate the primary heat source(s) 101 or secondary heat source(s) 104 depending on whether or not the measured temperature is below the threshold value, respectively.

The system 100 further comprises one or more antifreeze valve systems 1 installed on each secondary supply line 105, for example, at a section of said line located outside the closed environment. In accordance with what will be described later, the valve system 1, under the operating condition of the secondary heat source only 104, allows, in use, the passage of a full fluid passage in the secondary discharge line 105, for example, between 600 l/h and 18,000 l/h. Conversely, valve system 1, under the operating condition of primary heat source 101 only, allows, in use, a reduced flow rate of hot fluid passage from primary discharge line 102, for example, between 5 l/h and 300 l/h. In this way, the valve system 1 prevents water stagnation, and thus ice formation, in the secondary flow line 105 and secondary return line 106, thus preventing ruptures or water leakages.

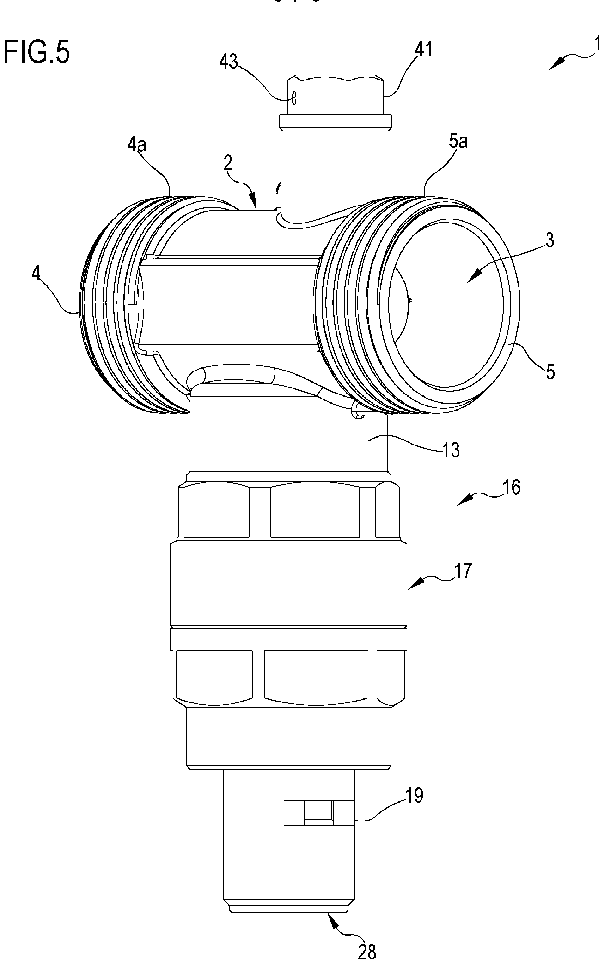

As will be subsequently detailed, an implementation variant of the antifreeze valve system 1 shown in Figures 5-7 can include an antifreeze valve 16 capable of detecting a change in temperature of the fluid circulating in the secondary supply line 105 and, depending on the temperature value detected, draining water to the external environment to prevent stagnation of water and consequent freezing of the piping, for example, in the event of failure to operate both the primary heat source and the secondary heat source. The use of such a variant of the valve system can find advantageous application to prevent the above-mentioned problems if there is an inability to operate each heat source, such as due to general power outages or failure of fuel supply or heat source malfunctions.

Turning now to a description of the antifreeze system 1, this has a manifold 2 having a substantially tubular structure comprising an inlet 4 and an outlet 5 including respective engagement portions 4a, 5a, e.g., threaded or press-fit portions, to allow for the tight engagement of manifold 2 to the secondary discharge line 105 of system 100. Manifold 2 also includes a channel 3 that places inlet 4 in fluid communication with outlet 5, which allows fluid passage through the same secondary supply line. Such channel 3 is perimeter bounded by an inner surface also tubular in shape and presenting a constant fluid passage section. In an example, the fluid passage section of channel 3 may present, at either inlet 4 or outlet 5, dimensions between 10 mm and 50 mm. Manifold 2 may have a first and second accesses 8, 9 in fluid communication with each other and in communication with channel 3 of manifold 2. The first and second accesses 8, 9 are openings made on the same side of manifold 2 in interposition between inlet 4 and outlet 5 of manifold 2. In an example, the first and second accesses 8, 9 can define respective openings having a reduced fluid passage section, optionally between 1 mm and 6 mm, which is smaller than the fluid passage section of manifold 2. In detail, the ratio of the fluid passage section of the first or second accesses 8, 9 to the fluid passage section of manifold 2 is, for example, less than 0.4, optionally between 0.05 and 0.25. In accordance with a possible solution, the ratio between the fluid passage section of both first and second access 8, 9 and the fluid passage section of manifold 2 is less than 0.4, optionally between 0.05 and 0.25.

The first access 8 may be made on a first section 2a of the manifold interposed between inlet 4 and a fluid shut-off member 6 later described, while the second access 9 may be made on a second section 2b of the manifold interposed between the same fluid shut-off member and outlet 5 of manifold 2.

Manifold 2 may also include a connecting section 10 that places the first and second accesses 8, 9 of the same manifold in fluid communication. The first and second accesses 8, 9 then define, in cooperation with connecting section 10, a bypass channel to allow fluid passage between inlet 4 and outlet 5 of manifold 2 while partially avoiding circulation through channel 3.

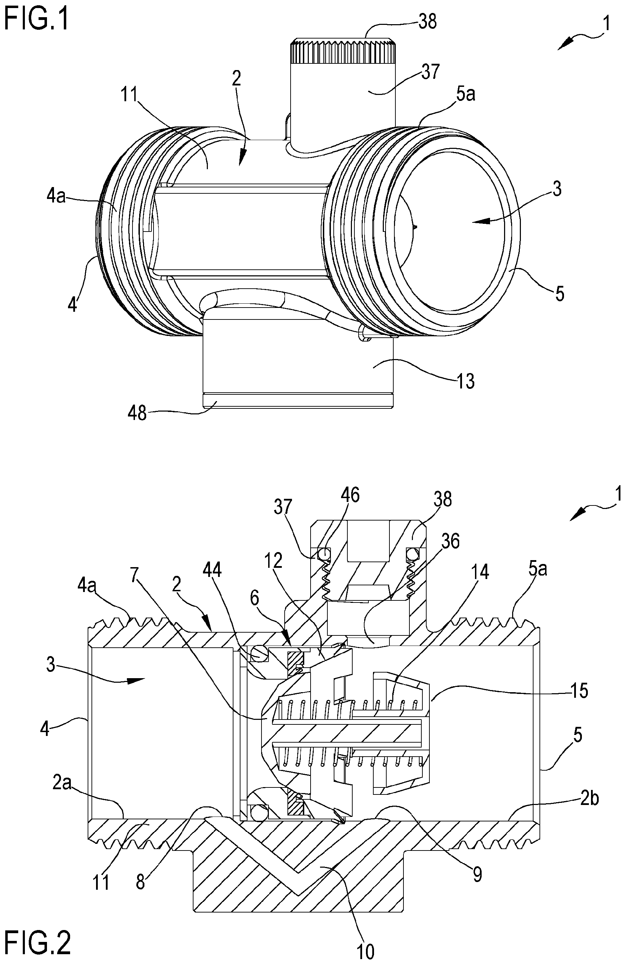

Referring to Figure 2, connecting section 10 may be made within a thickness of side wall 11 of manifold 2. In such a case, connecting section 10 is within one body with side wall 11 of manifold 2.

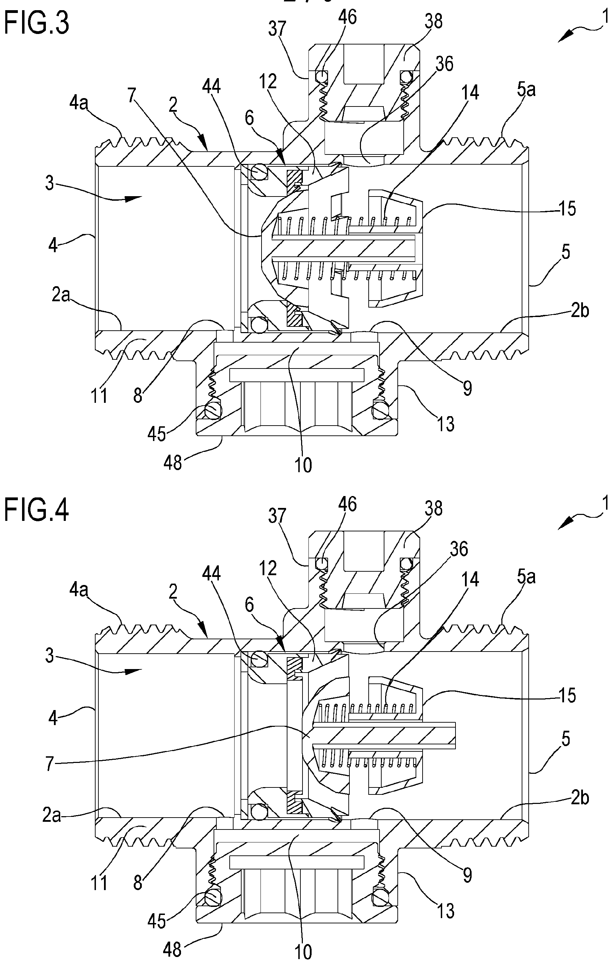

Alternatively, in accordance with the embodiments of the valve system shown in Figures 3-4 and 6-7, the connecting section 10 may be defined within a bushing 13 later described, adapted to mate with a hydraulic component.

The valve system 1 also includes a fluid shut-off member 6 positioned in channel 3 of manifold 2 to selectively allow fluid passage from inlet 4 to outlet 5. In one example, fluid shut-off member 6 may have a shutter 7 movable relative to manifold 2 between an open position wherein it allows fluid passage through channel 3 and a closed position wherein it prevents fluid passage. In detail, shutter 7 allows, in the open position, fluid passage between inlet 4 and outlet 5 of manifold 2, while preventing, in the closed position, fluid passage in the opposite direction, between outlet 5 and inlet 4. Shutter 7 can therefore be free of holes or through channels that would allow fluid to pass through the shutter when in the closed position.

As shown in Figures 2-4 and 6, 7, fluid shut-off member 6 may be axially positioned in interposition between the first and second accesses 8, 9 of manifold 2, so that shutter 7 does not act in opening or closing precisely on the first and second accesses 8, 9, which then constantly realize, in cooperation with connecting section 10, an auxiliary fluid communication between inlet 4 and outlet 5 of manifold regardless of the position of shutter 7. Continuing with the description of the fluid shut-off member 6, this may comprise a coupling portion 12 intended to receive in abutment the shutter 7 and to limit its travel by also preventing it from exiting the channel 3. In one example, the coupling portion 12 may have a hollow cylindrical conformation coaxial to the channel 3, presenting a radially outer surface engaged with the channel 3 and a radially inner surface cooperating with the shutter 7 in the closed position to prevent fluid passage through the channel 3. The fluid shut-off member 6 may also have a sealing element 44, such as an O-ring, radially interposed between the coupling portion 12 and the manifold 2, to ensure a fluid-tight coupling between them. Fluid shut-off member 6 may also have an abutting wall 15, for example, constrained to the coupling portion 12 or manifold 2, and spaced axially from the coupling portion to allow for the installation of a counter spring 14 acting on shutter 7. In one example, counter spring 14 is interposed between coupling portion 12 and end wall 14, and is configured to apply a force on shutter 7 such that it results in its movement from the open to closed position.

Moving on to describe the operation of fluid shut-off member 6, when valve system 1 is installed on secondary supply line 105 of system 100 with inlet 4 of manifold 2 facing secondary heat source 104 a full flow of fluid from heat source 104 is allowed to pass along secondary supply line 105. Conversely, under the same operating conditions, fluid shut-off member 6 is configured to block direct fluid passage from outlet 5 to manifold inlet 4 of manifold 2. Under the latter condition, fluid will still be allowed to pass, via first and second accesses 8, 9 and connecting section 10, from outlet 5 to inlet 4, while still reaching secondary heat source 104. Therefore, the first and second accesses 8, 9 allow, even with the shutter 7 in the closed position and by means of the connecting section 10, the delivery of a reduced flow rate of hot fluid in the direction of the secondary heat source 104, preventing stagnation of fluid in an initial section of the secondary supply line 105 and consequently preventing possible leakage or damage to the system due to icing.

Manifold 2 may also include a collar 37, emerging from an outer surface of manifold 2 in a transverse direction (e.g., orthogonal) to channel 3, defining a seat in communication with channel 3 via a hole 36 made on the manifold itself. In the embodiment shown in Figures 1-4, the valve system can include a closure element 38, which may be removably engaged to the collar 37 to close the seat of the collar itself and prevent fluid from leaking into an environment outside channel 3: by removing the cap 38, it is possible to have access to the channel or to install additional devices that may be associated with system 1. Referring instead to an implementation variant shown in Figures 5-7, the valve system may include a vacuum breaker valve 41 located in the seat of collar 37 and acting on channel 3 of manifold 2. In one example, vacuum breaker valve 41 may have a transducer 42 sensitive to a differential pressure between atmospheric pressure and a fluid pressure in channel 3. If the fluid pressure in channel 3 assumes values below atmospheric pressure, the vacuum breaker valve 41 opens to allow, through a hole 43, the introduction of gas, such as air, into the manifold so that the fluid pressure in channel 3 returns to equilibrium.

In an embodiment shown in Figures 3 and 4, manifold 2 may also include a bushing 13, emerging from an outer surface of manifold 2 in a transverse direction (e.g., orthogonal) to channel 3, surrounding the first and second accesses 8, 9 of manifold 2. The bushing 13 also has an engagement portion, e.g., a threaded portion, suitable for engaging removably and fluid-tightly with a respective engagement portion, also threaded, of an additional hydraulic component, such as the antifreeze valve 16 later described. In one example, the valve system may also present a cap 48 removably engaged to manifold 2 in closing bushing 13 and defining, in cooperation with the same bushing and the outer surface of manifold 2, connecting section 10. Cap 48 may also have an engagement surface, such as a threaded portion, adapted to engage the engagement portion of bushing 13. To seal the engagement between bushing 13 and cap 48, the valve system may additionally present a sealing element, for example, a gasket 45 shown in Figures 2-4, interposed between the engagement portions of bushing 13 and cap 48.

In a variant of the antifreeze valve system 1, as shown in Figure 5-7, instead of the cap 48, manifold 2 can have an antifreeze valve 16 removably engageable to bushing 13. In such a form of execution, the antifreeze valve system 1 may be made of two pieces that are removably engaged to each other fluid-tight, namely, manifold 2, which may be engaged to the secondary supply line 105 of system 100, and antifreeze valve 16, which is responsible for draining fluid to an environment outside system 1.

Turning now to a description of the antifreeze valve 16, this may comprise a valve body 17 presenting a structure made of two pieces, which are engaged with each other by means of respective engagement portions, optionally threaded, wherein fluid sealing is ensured by the presence of a sealing ring 47 interposed between said engagement portions.

Valve body 17 has an inlet 18 facing the first and second accesses 8, 9 of manifold 2 and engageable at bushing 13, at a respective engagement portion, e.g., threaded.

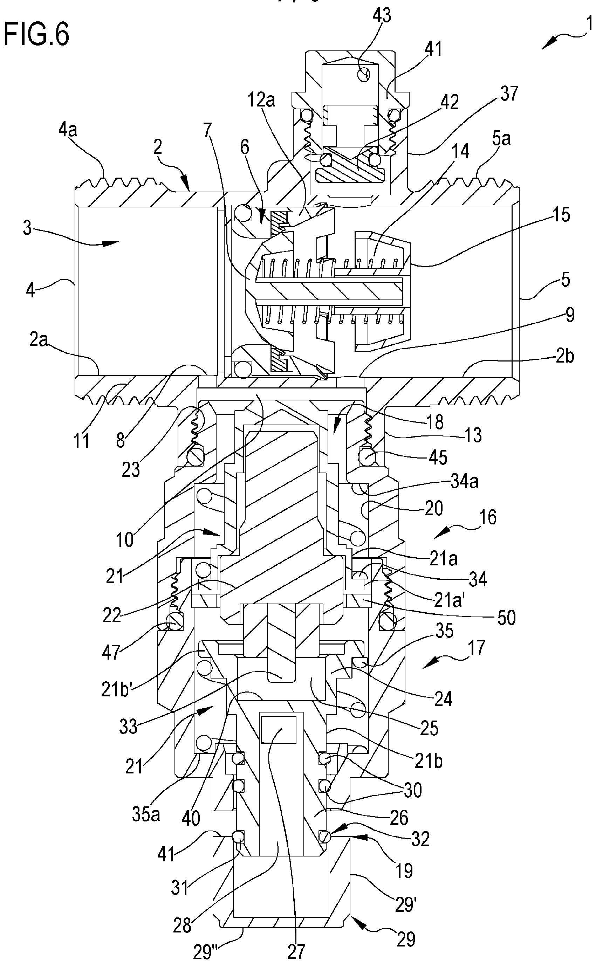

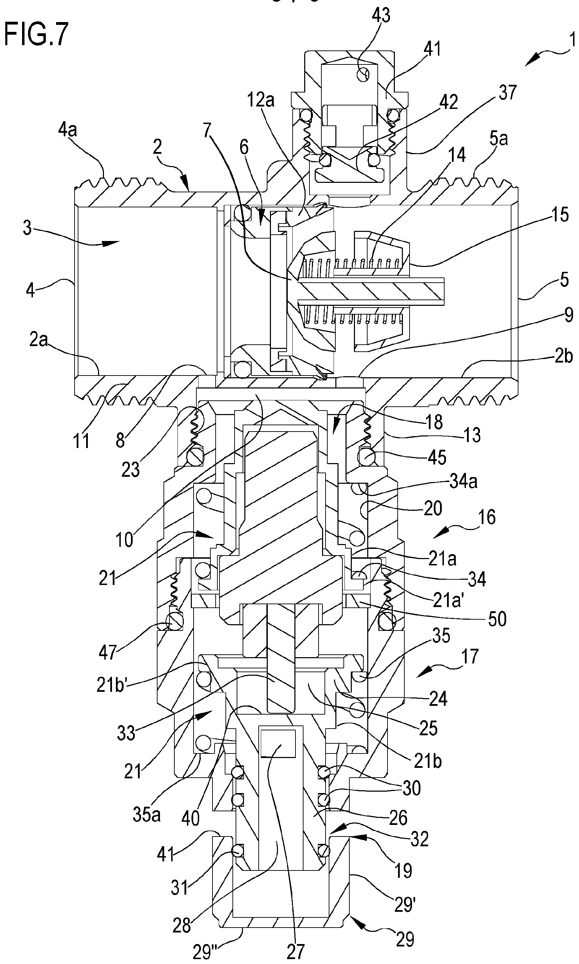

Valve body 17 also includes a drain 19 for expelling fluid to an environment outside the device, conformed as a radial opening made on a side wall of valve body 17, longitudinally opposite inlet 18 (see Figures 6 and 7). In one example, drain 19 is defined by two or more radial openings circumferentially spaced from each other. Inferior to drain 19, valve body 17 may include a collection zone 29 perimeterally bounded by a side wall 29' and inferiorly bounded by an end wall 29" of the same valve body. In other words, collection zone 29 defines a blind terminal end of valve body 17, longitudinally opposite inlet 18 and bordering drain 19.

Valve body 17 also includes a chamber 20 that places inlet 18 in fluid communication with drain 19 of valve body 17. In one example, valve body 17 includes a shutter 21 housed in chamber 20 and movable relative to valve body 17 to act in opening and closing position on drain 19. Thus, shutter 21 may be movable at least between a closed position wherein it obstructs drain 19 of valve body 17 and an open position wherein it places drain 19 in fluid communication with an environment outside the valve system. Note how the shutter 21 may be made in two pieces, namely an upper body 21a and a lower body 21b, which are distinct from each other and independently movable relative to the valve body 17 of the antifreeze valve 16. As shown in Figures 6 and 7, the upper body can face the inlet 18 of the valve body 17 of the antifreeze valve 16, while the lower body 21b can face the drain 19.

In relation to the upper body 21a, this may have a cup-like conformation having a perimeter edge 21a' configured to guide the movement of the same upper body 21a relative to the valve body 17.

In practice, the top edge 21a' may include a perforated flange, with a knurled perimeter edge or with an edge equipped with one or more appropriate ports, which contacts the inner surface of chamber 20 while allowing fluid passage.

The upper body 21a of shutter 21 also has a cavity, on the opposite side from the end portion 31, in fluid communication with chamber 7 of valve body 8 and configured to house at least one thermosensitive element 22 later detailed.

Finally, note how upper body 21a of shutter 21 does not act in opening or closing on the first and second accesses 8, 9, allowing constant fluid communication between the first and second sections 2a, 2b of manifold 2 regardless of the position assumed by shutter 7 of fluid shut-off member 6.

Turning now to describe the lower body 21b of shutter 7, this presents a cup-like conformation pre-prepared to obstruct the drain 19 under predetermined operating conditions of the antifreeze valve. The lower body 21b has a main body 24 on which a perimeter edge 21b' is defined configured to guide the movement of the lower body 21b relative to the valve body 17.

In practice, the lower edge 21b' may comprise a flange, such as drilled, with a knurled perimeter edge or with an edge equipped with one or more appropriate passage ports, which contacts the inner surface of chamber 18 and at the same time allows fluid passage. The main body 24 of the lower body 21b may also feature:
- a seat 25 facing the upper body 21a and configured to house at least part of the temperature-sensitive element 22,
- a hollow rod 26 extending from the main body 24 on the opposite side from the upper body 21a, in the direction of drain 19.

Hollow rod 26 may have an elongated tubular conformation running through drain 19 to the collection zone 29. Referring again to Figures 6 and 7, hollow rod 26 may have a side opening 27 that places the chamber 20 in fluid communication with a channel 28, which is internal to hollow rod 26 and configured to channel fluid into the collection zone 29. In one example, the lower body 21b of the shutter 21 may have an inner wall 40 that inferiorly bounds the seat 25 of said main body 24 and separates the same seat from the channel 28 of the hollow rod 26, preventing fluid communication therefrom.

Lower body 21b of shutter 21 may further have one or more first sealing elements 30, such as gaskets or O-rings, each carried by hollow rod 26 externally to channel 28 and in interposition between chamber 20 of valve body 17 and drain 19. As shown in Figure 7, each of the first sealing elements 30 is configured to prevent fluid passage from chamber 20 and through a gap defined superior to drain 19 between an outer wall of hollow rod 26 and valve body 17.

Lower body 21b of shutter 21 may also have a second sealing element 31, such as a gasket or O-ring, axially spaced from the first sealing elements 30 and carried by hollow rod 26 externally to channel 28. In one example, the second sealing element 31 is in interposition between drain 19 and collection zone 29 of valve body 17 to selectively allow fluid passage from collection zone 29 itself to drain 19. Under conditions of use of system 1 and particularly in the opening position of shutter 21, the second sealing element 31 is placed superior to a connecting edge between the side wall 29' of collection zone 29 and drain 19. In this condition, the second sealing element 31 defines a passage opening 32 in interposition between the side wall 29' of collection zone 29 and the same second sealing element 31, to place fluid passage between collection zone 29 and drain 19 (Figure 6). In other words, fluid within the collection zone 29 is expelled from drain 19 through the passage opening 32. Note how the provision of a seal, such as the second sealing element 31, which defines the passage opening 32 between the same seal and the drain, allows fluid passage to be effectively expelled by preventing or limiting the introduction of dust or debris that at most could settle in the collection zone in contact with the end wall 29", thus not compromising the proper operation of the entire valve device 17. In the closed position of shutter 21, the second sealing element 31 occludes the passage opening 32, thus preventing fluid passage from the collection zone 29 to drain 19.

Valve body 17 also includes a thermosensitive element 22 mechanically engaged to shutter 21. As will be later clarified, thermosensitive element 22 is at least responsible for moving upper body 21a and lower body 21b of shutter 21 away from and toward each other in the closed and open positions, respectively.

The temperature-sensitive element 22 is sensitive to changes in temperature and is at least partially deformable, optionally linearly, if the atmospheric or fluid temperature inside chamber 20 has a value below a predetermined threshold value between 0°C and 10°C, optionally substantially equal to 7°C. In one example, the temperature-sensitive element 22 may include a deformable component 33 that may be configured between a contracted condition if the atmospheric or fluid temperature in the chamber 20 is below the threshold temperature and a dilated condition if the atmospheric or fluid temperature is above the threshold temperature. In the dilated condition, the deformable component 33 has a maximum size such that it results in relative movement between the upper body 21a and the lower body 21b away from each other, bringing the lower body itself into closing drain 19 (Figure 7). Conversely, deformable member 33, in the contracted condition, has a size smaller than said maximum size to allow, under the action of springs (further successively detailed), the progressive movement of upper body 21a and lower body 21b moving closer together, bringing the shutter from the closed position to the open position (figure 6). In one example, deformable element 33 may be a wax body (or other material that contracts with decreasing temperature) having a variable volume according to a change in temperature, to allow movement of the shutter 21 between the open and closed positions.

In a variant of the temperature-sensitive element 22, the deformable component 33 may be a fluid or gel with variable volume as a function of temperature change.

As previously mentioned, valve body 17 can also include a first and second spring 34, 35 acting on upper body 21a and lower body 21b of shutter 21, respectively, to move them closer together when the temperature-sensitive element 22 is in the contracted condition. In detail, the first spring 34 is interposed between an upper shoulder 34a of valve body 17 facing first and second access 8, 9 and upper body 21a of shutter 21, optionally perimeter edge 21a', while the second spring 35 is interposed between a lower shoulder 35a of valve body 17 facing drain 19 and lower body 21b of shutter 21.

As mentioned above, the first and second springs 34, 35 have a prefixed elastic preload, configured to oppose the stroke of shutter 21, compressing only as a result of the expansion of the deformable component 33 from the contracted condition to the dilated condition. The second spring 35 also supports the lower body 21b of shutter 21, preventing its axial movement when the lower body itself is subjected to an axial force directed toward drain 19, which is less than the preload of the same second spring 35. It should be noted that an abutment element 50, such as an annular washer, may operate within chamber 20, limiting the downward travel of upper body 21a so that when the thermosensitive element 22 contracts and the perimeter edge 21a' acts in rebate against abutment element 50, the further contraction of the thermosensitive element results in greater upward movement of lower body 21b.

Turning now to describe the operation of the antifreeze valve system 1 when manifold 2 is coupled to the antifreeze valve 16 described above, under the condition that the temperature of the working fluid flowing through channel 3 is above the threshold temperature value and assuming that primary heat source 101 is in operation to heat the fluid in primary flow line 102, the deformable component 33 of the temperature-sensitive element 22 is in the dilated condition and the shutter 12 is in the closed position, allowing the fluid to circulate in the secondary flow line 105 without risk of freezing. In this condition, first and second accesses 8, 9 allow fluid to enter the manifold, inside chamber 20 of valve body 17 of antifreeze valve 16. The fluid is then pressurized inside chamber 20.

In the event that the fluid temperature is below the predetermined threshold value and that none of the primary and secondary heat sources 101, 104 are operating, the deformable component 33 of the temperature-sensitive element 22 moves into the contracted condition (Figure 6), allowing the springs 34 and 35 to move the first and second bodies 21a, 21b of the shutter 21 closer together. Thereafter, there is a progressive axial movement of the lower body 21b of shutter 21 to allow fluid passage through passage opening 32 and then through drain 19, thus preventing ice formation in the secondary discharge line 105 of system 100.

Considering now a condition wherein the fluid temperature is below the threshold temperature value and imagining that any heat source is activated, hot fluid (i.e., with temperature above the above-mentioned threshold temperature value) enters the interior of chamber 20 of the antifreeze valve through the first or second access 8, 9 to contact and heat the deformable component 33 to a temperature above the predetermined threshold value, resulting in the expansion of the deformable component and causing the shutter 21 to move to the closed position.

## Claims

1. Antifreeze valve system for hydraulic plants comprising:
- a manifold (2) having at least one inlet (4), at least one outlet (5), and at least one channel (3) placing the inlet (4) in fluid communication with the outlet (5),
- a fluid shut-off member (6) located in the channel (3) of the manifold (2) between the inlet (4) and the outlet (5), wherein said fluid shut-off member (6) has a shutter (7) movable with respect to the manifold itself between:
∘ an open position where it allows a fluid flow to pass through the channel (3) and directed from the inlet (4) to the outlet (5) of the manifold (2),
∘ a closed position where it prevents fluid flow to pass through the channel (3) and directed from the outlet (5) to the inlet (4) of the manifold (2),
wherein the manifold (2) has:
- a first access (8) defined on a first section (2a) of the manifold (2) interposed between the inlet (4) and the fluid shut-off member (6),
- a second access (9) defined on a second section (2b) of the manifold (2) interposed between the fluid shut-off member (6) and the outlet (5),
- a connecting section (10) configured to place the first access (8) in fluid communication with the second access (9),
wherein the first and second accesses (8, 9) are defined on the same side of the manifold (2) to allow, by means of the connecting section (10), a fluid passage between the first and second sections (2a, 2b) of the manifold (2).

2. System according to the preceding claim, wherein the connecting section (10) is defined within a thickness of a side wall (11) of the manifold (2),
wherein the shutter (7) of the fluid shut-off member (6) is not active, either in opening or closing, on the first and second accesses (8, 9) of the manifold (2), said first and second accesses (8, 9) constantly providing, in cooperation with the connecting section (10), an auxiliary fluid communication between the inlet (4) and the outlet (5) of the manifold (2),
wherein the first and second accesses (8, 9) are respective openings on the side wall (11) of the manifold (2), interposed between the inlet (4) and the outlet (5) of the manifold itself.

3. System according to any one of the preceding claims, wherein the shutter of the fluid shut-off member (6) is devoid of through holes or channels allowing a fluid to pass through the shutter (7) when it is in the closed position.

4. System according to any one of the preceding claims, wherein the first access (8) and/or the second access (9) have a passage cross-section smaller than a passage cross-section of the manifold (2), measured at the inlet (4) or at the outlet (5) of the manifold (2),
wherein the ratio between the passage cross-section of the first and/or second access (8, 9) and the passage cross-section of the manifold (2) is lower than 0.4, optionally comprised between 0.05 and 0.25.

5. System according to any one of the preceding claims, wherein the fluid shut-off member (6) has:
- a coupling portion (12) couplable to an inner surface of the manifold (2),
- an abutting wall (15) constrained to the coupling portion (12) and axially spaced from the latter,
- a counter spring (14) carried by the abutting wall (15) and interposed between it and the shutter (7) of the same fluid shut-off member, said counter spring (14) being configured for applying a force on the shutter (7) to cause its movement from the open to the closed position.

6. System according to any one of the preceding claims, wherein the manifold (2) comprises a bushing (13) emerging from an outer surface of the manifold (2) transversely, optionally orthogonally, to the channel (3), wherein said bushing (13) surrounds the first and second accesses (8, 9) of the manifold (2),
wherein the system includes a cap (48) removably engaged to the manifold (2) closing the bushing (13), wherein at least part of said cap (48) delimits, in cooperation with the bushing (13) and the outer surface of the manifold (2), the connecting section (10),
and wherein the bushing (13) has an engagement portion, optionally a threaded portion, opposite an outer surface of the manifold (2) and configured for removably engaging the cap (48),
and/or
wherein the manifold (2) includes a collar (37) emerging from an outer surface of the manifold (2) transversely to the channel (3), optionally from opposite side to the bushing (13), wherein said collar (37) defines a seat in communication with the channel (3) through a hole (36) made on the same manifold,
wherein the system includes a closure body (38) removably engageable to the collar (37) for closing the seat of the collar and preventing fluid leakage in an environment outside the channel (3).

7. System according to any one of the preceding claims, comprising an antifreeze valve (16) removably engaged to the manifold (2) and comprising:
- a valve body (17) having:
▪ an inlet (18) facing the first and second accesses (8, 9) of the manifold (2),
▪ a drain (19) opposite to the inlet (18) for discharging fluid into the environment,
▪ a chamber (20) placing the inlet (18) in fluid communication with the drain (19),
▪ a thermosensitive element (22) housed in the chamber (20) and sensitive to changes in temperature,
▪ a shutter (21) engaged to the thermosensitive element (22) inside the chamber (20) which, depending on the temperature detected by the thermosensitive element (22), is movable between:
▪ a closed position wherein said shutter (21) obstructs the drain (19) of the valve body (17),
▪ an opening position wherein said shutter (21) places the drain (19) in fluid communication with an environment outside the valve system.

8. System according to the preceding claim when depending on claim 6, wherein the antifreeze valve (16) is removably engaged to the bushing (13) of the manifold (2),
wherein the antifreeze valve (16) has a respective engagement portion (23), optionally a threaded portion, engageable to a/the engagement portion of the bushing (13).

9. System according to any one of the two preceding claims, wherein the shutter (21) of the antifreeze valve (16) includes:
- an upper body (21a), optionally cup-shaped, facing the first and second accesses (8, 9) of the manifold (2),
- a lower body (21b), optionally cup-shaped, distinct and spaced apart from the upper body (21a) and configured to close the drain (19) when the shutter is in the closed position,
wherein the upper body (21a) and the lower body (21b) of the shutter (21) of the antifreeze valve (16), are relatively movable in approaching and receding from each other, wherein, in the closed position of the shutter (21), the distance between the upper body (21a) and the lower body (21b) is greater than a distance between said bodies in the open condition of the shutter (21) itself,
wherein the upper body (21a) and the lower body (21b) of the shutter (21) of the antifreeze valve (16) have respective perimeter edges (21a', 21b') configured for guiding the movement of the respective bodies (21a, 21b) with respect to said valve body (17),
wherein the upper body (21a) of the shutter (21) includes a cavity facing the lower body (21b) of the shutter itself, said cavity being in fluid communication with the chamber (20) of the valve body (17) of the antifreeze valve (16) and configured for housing at least part of the thermosensitive element (22).

10. System according to the preceding claim, wherein the lower body (21b) of the shutter (21) has:
- a main body (24) on which a respective seat (25) facing the upper body (21a) of the shutter (21) is defined and configured for housing at least part of the thermosensitive element (22),
- a hollow rod (26) extending from the main body (24) across the drain (19), opposite to the upper body (21a), wherein the main body (24) of the lower body (21b) of the antifreeze valve (16) has a side opening (27) placing the chamber (20) of the antifreeze valve (16) in fluid communication with a channel (28) inside the hollow rod (26),
wherein the lower body (21b) of the shutter (21) has an inner wall (40) inferiorly delimiting the seat (25) of said main body (24) and separates the seat itself from the channel (28) of the hollow rod (26), preventing a fluid communication between them.

11. System according to the preceding claim, wherein the valve body (17) of the antifreeze valve (16) has a collection zone (29) inferiorly to the drain (19) and in fluid communication with the channel (28) of the hollow rod (26), said collection zone (29) being perimeterally delimited by a side wall (29') and inferiorly delimited by an end wall (29"),
wherein the lower body (21b) of the shutter (21) of the antifreeze valve (16) includes:
- one or more first sealing elements (30), each carried by the hollow rod (26) externally to the channel (27) and in interposition between the chamber (20) of the valve body (17) and the drain (19),
- a second sealing element (31) carried by the hollow rod (26) externally to the channel (27) and in interposition between the drain (19) and the collection zone (29) of the valve body (17) of the antifreeze valve (16),
wherein the first and second sealing elements (30, 31) are axially spaced apart,
wherein each of said first sealing elements (30) is configured for preventing the passage of fluid from the chamber (20) of the antifreeze valve (16) through a gap defined, in use conditions of the system (1), above the drain (19) between an outer wall of the hollow rod (26) and the valve body (17) of the antifreeze valve (16), wherein the second sealing element (31), in the open position of the shutter (21), defines a passage opening (32) in interposition between a side wall (29') of the collection zone (29) and the second sealing element (31) itself, configured for placing the collection zone (29) in fluid communication with the drain (19),
wherein the second sealing element (31), in the open position of the shutter (21), is placed, in use, above a connecting edge (41) between the side wall (29') of the collection zone (29) and the drain (19),
wherein the second sealing element (31), in the closed position of the shutter (21), occludes the passage opening (32) preventing the passage of fluids from the collection zone (29) towards the drain (19).

12. System according to any one of the preceding claims 9 to 11, wherein the thermosensitive element (22) comprises a deformable component (33), optionally made of heat conducting material of variable volume or a fluid having variable volume, configurable between:
- an expanded condition wherein it determines a relative movement of the upper body (21a) and lower body (21b) of the shutter (21) away from each other, causing the lower body of the shutter (21) itself to close the drain (19),
- a contracted condition wherein it determines a relative movement of the upper body (21a) and lower body (21b) of the shutter (21) approaching to each other, causing the lower body of the shutter (21) itself to open the outlet (19),
wherein the valve body (17) of the antifreeze valve (16) includes:
- a first spring (34) interposed between an upper shoulder (34a) of said valve body (17) facing the first and second access (8, 9) of the manifold (2) and the upper body (21a) of the shutter (21), optionally the perimeter edge (21a') of the upper body (21a),
- a second spring (35) interposed between a lower shoulder (35a) of said valve body (17) and the lower body (21b) of the shutter (21), optionally the perimeter edge (21b') of the lower body (21b),
wherein said first and second springs (34, 35) are configured for moving the upper body and the lower body (21a, 21b) closer together,
wherein the system includes a vacuum breaker valve (41) acting on the channel (3) of the manifold (2) and sensitive to a differential pressure between atmospheric pressure and a fluid pressure in the channel (3), wherein, when this claim is according to claim 6, the vacuum breaker valve (41) is located in the seat of the collar (37),
wherein said vacuum breaker valve (41) includes a transducer (42) configured for allowing, through a hole (43), the introduction of gas, e.g., air, into the manifold (2) when the fluid pressure in the channel (3) assumes values below atmospheric pressure.

13. System according to any one of the preceding claims comprising a cap (48) according to claim 6 or an anti-freeze valve (16) according to any one of claims from 7 to 12, alternatively removably engageable, to the manifold (2), optionally engageable to the bushing (13).

14. Use of the valve system according to any one of the preceding claims in an air conditioning plant, said system comprising:
- one or more primary heat sources (101) each configured for heating a fluid circulating in a primary supply line (102),
- one or more secondary heat sources (104) each configured for heating a fluid circulating in a respective secondary supply line (105),
wherein the primary supply line (102) and secondary supply line (105) are placed in fluid communication with one or more fluid supply lines (108), each of which is directed to serve a predetermined number of consumers (107).

15. Use of the valve system according to the preceding claim, wherein the primary heat sources (101) are configured for working alternately with the secondary heat sources (104) to serve the consumers (107), wherein each primary heat source (101), in an active condition, is configured for heating the fluid circulating in the primary supply line (102) if the temperature of an outside environment to said closed environment is below a predetermined threshold, e.g., equal to 3°C, optionally equal to 0°C,
wherein each secondary heat source (104), in a respective activation condition, is configured for heating the circulating fluid in the secondary supply line (105) if the temperature of an environment outside of said closed environment is higher than said predetermined threshold,
wherein said valve system (1) is placed on the secondary supply line (105),
wherein in an/the respective activation condition of each primary heat source (101), said valve system allows the passage of a fluid flow rate in the secondary supply line (105), between 600 l/h and 18,000 l/h, and
wherein in a/the respective activation condition of each secondary heat source (104), said valve system allows the passage of a fluid flow rate in the secondary supply line (105), comprised between 5 l/h and 300 l/h,
wherein the plant includes:
- one or more discharge lines (109), each of which channels a flow of fluid exiting a respective consumer (107),
- a primary return line (103) connected to the primary heat source (101) and to each of said one or more discharge lines (109),
- a secondary return line (106) connected to the secondary heat source (104) and to each of said one or more discharge lines (109).
